# EUROPEAN PATENT APPLICATION

(11) **EP 2 693 842 A1**
(43) Date of publication of application: **05.02.2014**
(21) Application number: 12178701.4
(22) Date of filing: 31.07.2012
(51) Int. Cl.: H05B 33/08, G05F 3/26

(54) **Current supply arrangement and method for generating a supply current**

(71) Applicant: ams AG, 8141 Unterpremstätten (AT)
(72) Inventor: Jessenig, Thomas, 8010 Graz (AT); Lueger, Manfred, 8504 Preding (AT); Halper, Christian, 7534 Olbendorf (AT); Bliem, Peter, 8041 Graz (AT)
(74) Representative: Epping - Hermann - Fischer

(57) **Abstract**

A current supply arrangement for supplying a lighting device comprises a current regulator (OP1) with a first transistor (T1) coupled to an output terminal (OUT) for outputting a supply current (IOUT). A reference current terminal (CT) is configured to receive a reference current (IR). A second transistor (T2) is connected between the reference current terminal (CT) and a supply potential terminal (VSUP, GND). A third transistor (T3) is connected between the first transistor (T1) and the supply potential terminal (VSUP, GND). A voltage regulator (OP2) is configured to control a voltage across the second transistor (T2) and the third transistor (T3) based on a reference voltage (VR) and a potential at the reference current terminal (CT). The current regulator (OP1) is configured to control a current (IOUT) through the first transistor (T1) based on the reference voltage (VR) and a potential at the connection between the first transistor (T1) and the third transistor (T3).

## Description

The invention relates to a current supply arrangement, in particular for supplying a lighting device, and to a method for generating a supply current.

In current supply applications, for example, for supplying lighting devices like LEDs, it is often desired to provide a predefined current to achieve a desired lighting experience. To this end, in some conventional applications, a voltage across an ohmic sense resistor is controlled to be equal to a reference voltage in order to achieve a desired output current through the sense resistor. The reference voltage may be generated by means of a reference current source and a reference resistor. In the conventional solutions, great effort is needed to achieve the desired output current with a high precision.

It is an object of the present invention to provide an improved concept for supply current generation.

This object is achieved with the subject-matter of the independent claims. Embodiments and developments of the invention are achieved with the subject-matter of the dependent claims.

The improved concept is based on the idea that the voltages across a conventional ohmic reference resistor and a conventional ohmic sense resistor vary with the value of the reference current. If such a voltage drop is in the order of an offset error of a controlling amplifier, the desired output current cannot be achieved with a high precision. Hence in the improved concept, transistors are used for setting a voltage drop corresponding to a reference voltage, which can be determined externally. The transistors are controlled regarding their resistance, such that the desired reference voltage is set across the transistors. Hence, the desired output current or supply current is independent of an actual resistance value of the transistors. The transistors, acting as a sensing element and as a reference element, are controlled simultaneously to achieve a fixed resistance ratio or current ratio, respectively, between the transistors. With the described concept, a higher accuracy over a wide dynamic range can be achieved, because an offset of a controlling amplifier has less impact on the output current accuracy, especially at low output current values. In the proposed concept, it is not necessary to provide compensation circuits to achieve a low offset voltage.

An embodiment of a current supply arrangement for supplying a lighting device comprises a current regulator with a first transistor, which is coupled to an output terminal for outputting a supply current, and a reference current terminal, which is configured to receive a reference current. A second transistor is connected between the reference current terminal and a supply potential terminal, for example for supplying a supply voltage or a ground potential. A third transistor is connected between the first transistor and the supply potential terminal. The arrangement further comprises a voltage regulator, which is configured to control a voltage across the second transistor and the third transistor based on a reference voltage and a potential at the reference current terminal. The current regulator is configured to control a current through the first transistor based on the reference voltage and a potential at the connection between the first transistor and the third transistor. For example, the current through the first transistor forms an output current or a supply current for the lighting device. In some embodiments, the arrangement includes a reference current source that is connected to the reference current terminal for supplying the reference current. In other embodiments, the reference current may be provided from an external source to the reference current terminal.

In the embodiments of the current supply arrangement, the reference current flows through the second transistor. A voltage across the second transistor, which is present at the reference current terminal, for example, is controlled by the voltage regulator to be equal to the reference voltage or a voltage derived thereof. In other words, a resistance value of the second transistor is controlled such that the reference current results in the desired voltage drop. The control signal, which is used to control the second transistor, is also applied to control the third transistor such that the second and the third transistors are controlled concurrently. The current regulator controls the first transistor such that it provides a current to the third transistor resulting in a voltage drop across the third transistor being equal to the reference voltage or the voltage derived thereof. Hence, the voltage across the second transistor and the voltage across the third transistor are basically equal during operation of the arrangement. As a consequence, the output current through the first and the third transistor is related to the reference current by a resistance ratio of the third and the second transistor. According to one embodiment, the current regulator comprises a differential amplifier with a first input for providing the reference voltage or a voltage derived thereof, with a second input coupled to the connection between the first transistor and the third transistor, and with an output coupled to a control terminal of the first transistor. Hence, the first transistor is controlled such that at the connection between the first transistor and the third transistor the voltage at the first input is achieved.

According to a further embodiment, the voltage regulator comprises a differential amplifier with a first input for providing the reference voltage, with a second input coupled to the reference current terminal, and with an output coupled to respective control terminals of the second transistor and the third transistor. Hence, the second and the third transistor are controlled such that a voltage at the reference current terminal, to which the second transistor is connected, is equal to the reference voltage.

In the described embodiments, the voltage regulator basically controls the resistance values of the second and the third transistor in a concurrent fashion, such that the resistance value of the third transistor increases if the resistance value of the second transistor is increased. Preferably, the resistance values of the second and the third transistor increase or decrease proportionally, such that a constant or almost constant resistance ratio or current ratio, respectively, is kept between the second and the third transistor during operation. For example, this can be achieved by using transistors for the second and the third transistor which are matched to each other.

For example, a current capability ratio of the third transistor to the second transistor is greater than 1. In other words, the third transistor needs a higher current than the second transistor to achieve the same voltage drop. This has the effect that a small reference current provided at the reference current terminal can result in a higher output current or supply current at the output terminal.

In some specific embodiments the third transistor comprises a plurality of parallel connected transistor devices of the same dimension, which is the dimension of the second transistor. Hence, a number of identical transistor devices can be provided in an integrated circuit from which one device is used as the second transistor and a predefined number n of transistor devices is connected in parallel and used as the third transistor. Hence, a current capability ratio of n:1 is achieved between the third transistor and the second transistor. This known ratio can be used for determining a desired reference current to achieve a desired output current or supply current.

The above-described effects of the second and the third transistor can be best achieved if the second transistor and the third transistor are dimensioned such that they are operated in their ohmic region or linear region, if e.g. implemented as field effect transistors.

The precision of the arrangement according to the improved concept is irrespective of the value of the reference current. However, the precision can be influenced by choosing a value of the reference voltage. Having in mind that the reference voltage is visible at the output terminal due to the voltage drop across the third transistor, it is desirable to choose the reference voltage to be as low as possible with respect to the aim of achieving a small compliance voltage of the arrangement. However, the precision depends on a potential offset of the current regulator and/or the voltage regulator, which aim to achieve the reference voltage as described above. If the reference voltage is smaller than such an offset voltage or in the order of such an offset voltage, regulation errors may occur. If the reference voltage is greater, in particular substantially greater than such offset voltages, a potential offset error can be neglected and the desired output current can be achieved with a high precision. Hence, the various embodiments of the arrangement are preferably operated with a reference voltage which is greater than an offset voltage of the current regulator and/or the voltage regulator, respectively. For this reason, compensation circuits for decreasing potential offset voltages may not be needed with the arrangement according to the improved concept.

The various embodiments of the improved concept allow the generation of supply currents with a wide dynamic range, which is based on the fact that a wide dynamic range is possible for the reference current.

In a method for generating a supply current for a lighting device, a first transistor, a second transistor and a third transistor are provided, wherein the first transistor and the third transistor are connected in series between an output terminal and a supply potential terminal. A reference current is provided to the second transistor. A voltage across the second transistor and the third transistor is controlled based on a reference voltage and the reference current. A current through the first transistor is controlled based on the reference voltage and a potential at the connection between the first transistor and the third transistor. The current through the first transistor forms the supply current.

For example, the first transistor is connected to the output terminal and the third transistor is connected to the supply potential terminal.

In various embodiments of the method, the second transistor and the third transistor are operated in their ohmic region.

In further embodiments of the method, the second transistor and the third transistor are matched to each other, as described before for the embodiments of the current supply arrangement. For example, a current capability ratio of the third transistor to the second transistor is greater than 1.

Further embodiments of the method for generating a supply current become apparent from the various embodiments of the current supply arrangement described above.

The text below explains the invention in detail using exemplary embodiments with reference to the drawings. Components and circuit elements that are functionally identical or have an identical effect bear identical reference numbers. In so far as circuit parts or components correspond to one or another function, a description of them will not be repeated in each of the following figures.

In the drawings:
- Figure 1: shows an embodiment of a current supply arrangement;
- Figure 2: shows a further embodiment of a current supply arrangement;
- Figure 3: shows a further embodiment of a current supply arrangement; and
- Figure 4: shows an embodiment of transistors, which can be used with the embodiments of Figure 1, Figure 2 and Figure 3.

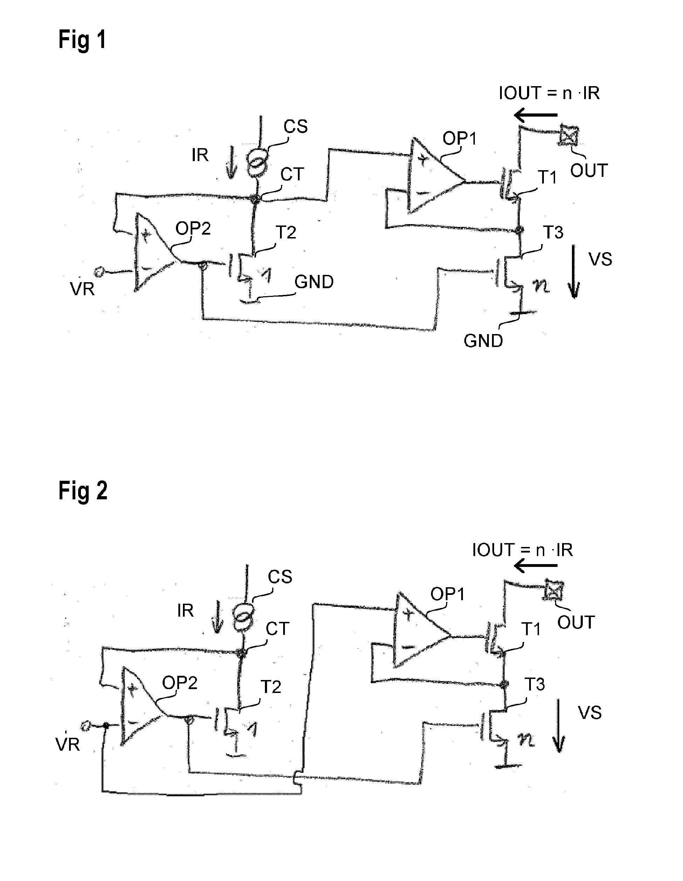

Figure 1 shows an embodiment of a current supply arrangement. A first transistor T1 and a transistor T3 are connected in series between an output terminal OUT and a supply potential terminal, in particular a ground potential terminal GND. A reference current source CS is connected to a reference current terminal CT for providing a reference current IR. A second transistor T2 is connected between the reference current terminal CT and the ground potential terminal GND. The first transistor T1, the second transistor T2 and the third transistor T3 are implemented as n-channel field-effect transistors in this embodiment. Gate connections of the second transistor T2 and the third transistor T3 are connected together. The current supply arrangement comprises a first differential amplifier OP1 with an output coupled to the gate terminal of transistor T1, an inverting input coupled to the connection between the first transistor T1 and the third transistor T3, and a non-inverting input coupled to the reference current terminal CT. The arrangement further comprises a second differential amplifier OP2 with an output coupled to the common gate connection of transistors T2, T3. An inverting input of the second differential amplifier OP2 is provided with a reference voltage VR, and a non-inverting input of the amplifier OP2 is connected to the reference current terminal CT.

During operation of the arrangement, a reference current IR is provided to the reference current terminal CT by the reference current source CS. In this embodiment, the reference current source CS is part of the current supply arrangement. However, in other embodiments, the reference current IR can be provided to the reference current terminal CT by some external component.

The reference current IR flows through the second transistor T2 resulting in a voltage drop across the controlled section of transistor T2. The second amplifier OP2, which acts as a voltage regulator, controls the transistor T2 such that the aforementioned voltage drop across transistor T2 is equal or basically equal to the reference voltage VR. Hence, during operation of the current supply arrangement, the potential at the reference current terminal CT is equal or basically equal to the reference voltage VR. The third transistor T3 is controlled concurrently with the second transistor T2.

The first amplifier OP1 controls a current through the first transistor T1 such that a sensing voltage VS across third transistor T3 is equal or basically equal to the voltage at the reference current terminal CT, hence the reference voltage VR. The regulation described before results in that the voltages across the second and the third transistors T2, T3 are equal or basically equal.

The second transistor T2 and the third transistor T3 preferably are matched to each other, such that the current through the transistors T2, T3 changes proportionally with varying control voltages. In this embodiment, the third transistor T3 has a current capability n-times higher than that of the second transistor T2. This has the effect that the output current or supply current drawn at the output terminal OUT is n-times higher than the reference current IR. Expressed as a formula, this results in IOUT = n · IR.

Hence a small reference current IR is sufficient to achieve a desired output current IOUT. Consequently, power losses due to the current IR through the transistor T2 can be kept low.

Regulation of the second and the third transistor T2, T3 is based basically on a resistance regulation for having the desired reference voltage VR as a voltage drop across the transistors T2, T3, irrespective of a value of the reference current IR. Hence, the current supply arrangement can be operated with a wide dynamic range of reference currents IR and output currents IOUT, respectively.

Preferably, the reference voltage VR is chosen such that it is greater than a potential offset voltage of the first and the second amplifier OP1, OP2. Hence, such a potential offset error has less impact on the regulation result, in particular compared to a regulation in the order of such an offset voltage. This has the further effect that additional offset compensation circuits are not necessary for the various embodiments of the current supply arrangement. However, the reference voltage VR is preferably chosen as small as possible to achieve a small compliance voltage of the current supply arrangement.

The second and the third transistors T2, T3 may be dimensioned such that they are operated in their ohmic or linear region. This can improve the effect of the wide dynamic range of the reference current or output current, respectively.

The current supply arrangement shown in Figure 1 may be used as a current sink for a lighting device. For example, a string of light-emitting diodes, LEDs, is connected between a voltage supply (not shown) and the output terminal OUT.

Figure 2 shows a further embodiment of a current supply arrangement, which is basically identical to the embodiment of Figure 1 besides some structural differences. The difference in Figure 2 is that the non-inverting input of the first amplifier OP1 is connected to the inverting input of the second amplifier OP2, at which the reference voltage VR is provided. However, as described before for Figure 1, the voltage at the reference current terminal CT is the same or basically the same as the reference voltage VR, such that the embodiment of Figure 2 functions in the same way as the embodiment of Figure 1.

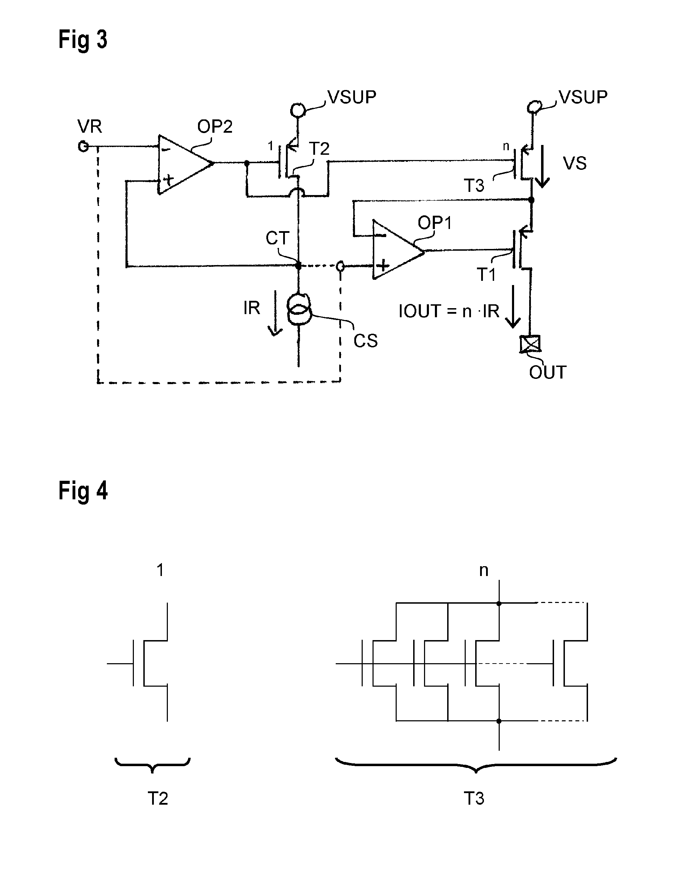

Figure 3 shows a further embodiment of a current supply arrangement, which differs from the previous embodiments in that it is implemented as a current source instead of a current sink. In this embodiment, compared to the previous embodiments of Figure 1 and Figure 2, the n-channel field-effect transistors are replaced by p-channel field-effect transistors T1, T2, T3. Furthermore, directions of the reference current IR and the output current IOUT are reversed. The ground potential terminal GND is replaced with a voltage supply potential terminal VSUP.

Similar to the previous embodiments, the first and the third transistors T1, T3 are connected in series between the supply potential terminal VSUP and the output terminal OUT. A reference current source CS draws a reference current IR at the reference current terminal CT, to which the second transistor T2 is connected.

During operation of the arrangement, the reference current IR flows to the second transistor T2 resulting in a voltage drop, which is regulated by the second amplifier OP2 to be the difference between the supply voltage at the supply VSUP and the reference voltage VR, such that the reference voltage VR is present at the reference current terminal CT.

The non-inverting input of the first amplifier OP1 is either connected to the reference current terminal CT or to the inverting input of the second amplifier OP2, to which the reference voltage VR is provided. Hence, the same reference voltage VR results at the connection between the first and the third transistors T1, T3. The same effects as described for the embodiments of Figure 1 and Figure 2 are present in the embodiment of Figure 3. In particular, a current capability ratio of n:1 between the third transistor T3 and the second transistor T2 results in the output current IOUT being n-times the reference current IR.

A high precision of the output current can be also achieved with the embodiment of Figure 3. Furthermore, the current supply arrangement can be operated with a wide dynamic range for the reference current IR and the output current IOUT, respectively.

Figure 4 shows an implementation form of the second transistor T2 and the third transistor T3, which can be used in the above described embodiments. In particular, Figure 4 describes one implementation for achieving a defined current capability ratio between the third transistor T3 and the second transistor T2. Accordingly, the second transistor T2 comprises a single transistor unit of defined dimensions, implemented within an integrated circuit. Transistor T3 comprises n of such transistor units implemented within the integrated circuit, which are connected in parallel with their respective terminals. Each of the transistor units of the transistor T3 preferably has the same dimensions, which are the dimensions of the transistor units of transistor T2. Hence, transistor T3 has a current capability of n-times greater than the current capability of transistor T2.

The embodiment of Figure 4 only describes one of several possible implementation forms to achieve a current capability ratio.

### Reference List

- T1, T2, T3: transistor
- OP1, OP2: amplifier
- IR: reference current
- IOUT: supply current
- VR: reference voltage
- CT: reference current terminal
- CS: reference current source
- VS: sensing voltage
- GND: ground potential terminal
- VSUP: voltage supply potential terminal
- OUT: output terminal

## Claims

1. Current supply arrangement for supplying a lighting device, the arrangement comprising
- a current regulator (OP1) with a first transistor (T1) coupled to an output terminal (OUT) for outputting a supply current (IOUT);
- a reference current terminal (CT), which is configured to receive a reference current (IR);
- a second transistor (T2) connected between the reference current terminal (CT) and a supply potential terminal (VSUP, GND);
- a third transistor (T3) connected between the first transistor (T1) and the supply potential terminal (VSUP, GND); and
- a voltage regulator (OP2), which is configured to control a voltage across the second transistor (T2) and the third transistor (T3) based on a reference voltage (VR) and a potential at the reference current terminal (CT);
wherein the current regulator (OP1) is configured to control a current through the first transistor (T1) based on the reference voltage (VR) and a potential at the connection between the first transistor (T1) and the third transistor (T3).

2. Arrangement according to claim 1,
wherein the current regulator comprises a differential amplifier (OP1) with a first input for providing the reference voltage (VR) or a voltage derived thereof, with a second input coupled to the connection between the first transistor (T1) and the third transistor (T3), and with an output coupled to a control terminal of the first transistor (T1) .

3. Arrangement according to claim 1 or 2,
wherein the voltage regulator comprises a differential amplifier (OP2) with a first input for providing the reference voltage (VR), with a second input coupled to the reference current terminal (CT), and with an output coupled to respective control terminals of the second transistor (T2) and the third transistor (T3).

4. Arrangement according to one of claims 1 to 3,
wherein the second transistor (T2) and the third transistor (T3) are matched to each other.

5. Arrangement according to claim 4,
wherein a current capability ratio of the third transistor (T3) to the second transistor (T2) is greater than one.

6. Arrangement according to claim 5,
wherein the third transistor (T3) comprises a plurality of parallel connected transistor devices of the same dimension, which is the dimension of the second transistor (T2).

7. Arrangement according to one of claims 1 to 6,
wherein the second transistor (T2) and the third transistor (T3) are dimensioned such that they are operated in their ohmic region.

8. Arrangement according to one of claims 1 to 7,
wherein the first transistor (T1), the second transistor (T2) and the third transistor (T3) are field-effect transistors.

9. Arrangement according to one of claims 1 to 8,
which is configured to be operated with a reference voltage (VR) which is greater than an offset voltage of the current regulator (OP1) and/or the voltage regulator (OP2), respectively.

10. Arrangement according to one of claims 1 to 9,
further including a reference current source (CS) that is connected to the reference current terminal (CT).

11. Method for generating a supply current (IOUT) for a lighting device, the method comprising:
- providing a first transistor (T1), a second transistor (T2) and a third transistor (T3), the first transistor (T1) and the third transistor (T3) being connected in series between an output terminal (OUT) and a supply potential terminal (VSUP, GND);
- providing a reference current (IR) to the second transistor (T2);
- controlling a voltage across the second transistor (T2) and the third transistor (T3) based on a reference voltage (VR) and the reference current (IR); and
- controlling a current through the first transistor (T1) based on the reference voltage (VR) and a potential at the connection between the first transistor (T1) and the third transistor (T3), wherein the current through the first transistor (T1) forms the supply current (IOUT).

12. Method according to claim 11,
wherein the first transistor (T1) is connected to the output terminal (OUT) and the third transistor (T3) is connected to the supply potential terminal (VSUP, GND).

13. Method according to claim 11 or 12,
wherein the second transistor (T2) and the third transistor (T3) are operated in their ohmic region.

14. Method according to one of claims 11 to 13,
wherein the second transistor (T2) and the third transistor (T3) are matched to each other.

15. Method according to claim 14,
wherein a current capability ratio of the third transistor (T3) to the second transistor (T2) is greater than one.
